# EUROPEAN PATENT APPLICATION

(11) **EP 4 632 641 A1**
(43) Date of publication of application: **15.10.2025**
(21) Application number: 25168773.7
(22) Date of filing: 07.04.2025
(51) Int. Cl.: G06Q 10/0631, G06Q 30/0601, H04M 15/00

(54) **INFORMATION PROCESSING DEVICE AND SERVICE DELIVERY PROGRAM**

(30) Priority: 12.04.2024 JP 2024064961; 12.04.2024 JP 2024064962
(71) Applicant: KYOCERA Document Solutions Inc., Osaka-shi, Osaka, 540-8585 (JP)
(72) Inventor: KANDA, Miwako, Osaka-shi, Osaka, 540-8585 (JP)
(74) Representative: Herrero & Asociados, S.L.

(57) **Abstract**

A storage device (24) stores: plan information indicating plans for using a service; and first allowable/disallowable switch information indicating allowability or disallowability of a plan switch from a current plan for which a tenant using the service has a contract to another plan intended to switch thereto in association with a combination of a nature of the current plan intended to switch therefrom and a nature of the plan intended to switch thereto. Upon issuance of an instruction to switch from the current plan intended to switch therefrom to the plan intended to switch thereto, a service deliverer (25a) determines whether the plan switch is allowable or disallowable based on the plan information and the first allowable/disallowable switch information, keeps from making the plan switch when the plan switch is determined to be disallowable, and makes the plan switch when the plan switch is determined to be allowable.

## Description

The present invention relates to service delivery systems delivering service to customers and service delivery programs.

A service price plan proposal system is known which manages, among a plurality of plans in which a customer can use a service, a plan selected by the customer. A known example of the above service is a service that delivers an application to customers. In a system that delivers the service, a service provider may take the form of delivering an application service through sellers to customers and selling the application service to the sellers by wholesale. Therefore, in such a service delivery system, each seller sets, on behalf of an individual customer, a plan for which the customer may make a contract.

### SUMMARY

A technique improved over the aforementioned techniques is proposed as one aspect of the present invention.

An information processing device for service delivery according to an aspect of the present invention includes a storage device and a controller. The storage device stores: plan information indicating a plurality of plans for using a service; and first allowable/disallowable switch information indicating allowability or disallowability of a plan switch from a current plan for which a tenant using the service has a contract to another plan intended to switch thereto in association with a combination of a nature of the current plan intended to switch therefrom and a nature of the plan intended to switch thereto. The controller includes a processor and functions, through the processor executing a service delivery program, as a service deliverer that, upon issuance of an instruction to switch from the current plan for which the tenant has the contract to the plan intended to switch thereto, determines whether the instructed plan switch between the plans is allowable or disallowable based on the plan information and the first allowable/disallowable switch information both stored in the storage device, keeps from making the plan switch when the plan switch is determined to be disallowable, and makes the plan switch when the plan switch is determined to be allowable.

A service delivery program is an aspect of the present invention. The service providing program allows a processor of an information processing device for service delivery comprising: a storage device storing (i) plan information indicating a plurality of plans for using a service and (ii) allowable/disallowable switch information indicating allowability or disallowability of a plan switch from a current plan for which a tenant using the service has a contract to another plan intended to switch thereto in association with a combination of a nature of the current plan intended to switch therefrom and a nature of the plan intended to switch thereto; and the processor, to execute processing for determining, upon issuance of an instruction to switch from the current plan for which the tenant has the contract to the plan intended to switch thereto, whether the instructed plan switch between the plans is allowable or disallowable based on the plan information and the allowable/disallowable switch information both stored in the storage device, keeping from making the plan switch when the plan switch is determined to be disallowable, and making the plan switch when the plan switch is determined to be allowable.

### BRIEF DESCRIPTION OF THE DRAWINGS

FIG. 1 is a block diagram showing a system according to one embodiment of the present invention.
FIG. 2 is a block diagram of a service delivery system shown in FIG. 1 when constituted by a single computer.
FIG. 3 is a table showing an example of tenant management information shown in FIG. 2.
FIG. 4 is a diagram showing an example of the relationship between tenants being managed according to the tenant management information shown in FIG. 3.
FIG. 5 is a table showing an example of plan information shown in FIG. 2.
FIG. 6 is a table showing an example of switch determination information shown in FIG. 2.
FIG. 7 is a block diagram of an example of a seller terminal shown in FIG. 1.
FIG. 8 is a flowchart of an operation of the service delivery system shown in FIG. 2 upon issuance of an instruction to switch contract plans on an application service.
FIG. 9 is a diagram showing by arrows switches to be allowed according to the operation shown in FIG. 8.
FIG. 10 is a block diagram showing the configuration of a service delivery system 20 according to a second embodiment.
FIG. 11 is a table showing an example of contents of tenant management information for use in the service delivery system according to the second embodiment.
FIG. 12 is a table showing an example of switch determination information according to a second embodiment.
FIG. 13 is a table showing an example of second switch determination information.
FIG. 14 is a flowchart of an operation performed by the service delivery system according to the second embodiment upon issuance of an instruction to switch contract plans on an application service.
FIG. 15 is a diagram showing by arrows switches to be allowed according to the operation shown in FIG. 14.

### DETAILED DESCRIPTION

Hereinafter, a description will be given of a service delivery system and a service delivery program according to each of embodiments as aspects of the present invention with reference to the drawings. First, a description will be given of the configuration of a system according to a first embodiment of the present invention.

### <First Embodiment>

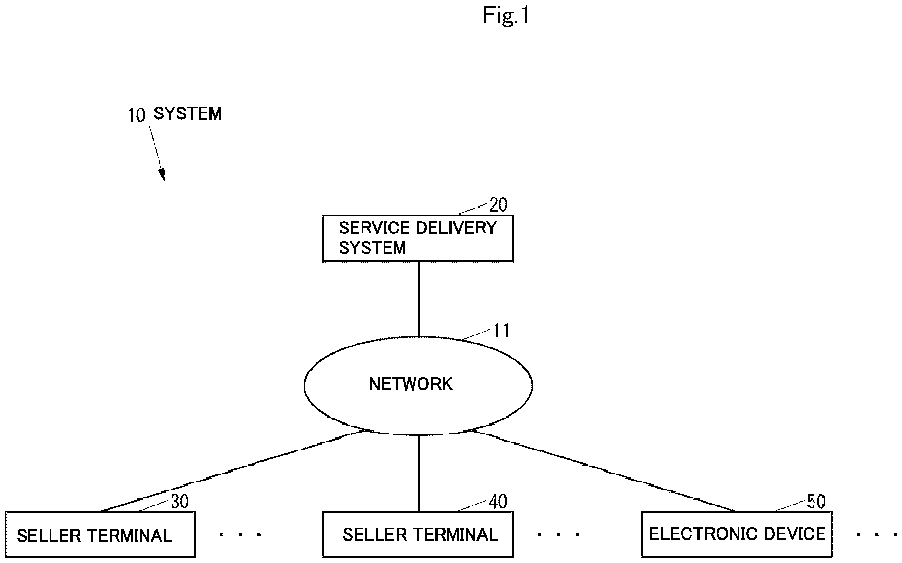

FIG. 1 is a block diagram showing a system 10 according to this embodiment. As shown in FIG. 1, the system 10 includes a service delivery system 20 serving as a platform system that delivers an application service to users belonging to each tenant. The service delivery system 20 is a multi-tenant system for use by a plurality of tenants. The service delivery system 20 is constituted by a single computer, such as a PC (personal computer), but may be constituted by a plurality of computers. The service delivery system 20 is an example of the information processing device for service delivery defined in CLAIMS.

The service delivery system 20 has been developed by a service provider that delivers an application service to users.

The tenants in the service delivery system 20 include: customers who use an application service delivered by the service delivery system 20; and sellers that sell to the customers the application service to be delivered by the service delivery system 20. The customers are end users. The sellers include, for example, a sales company of the service provider and dealers.

The service provider sells to the sellers the application service to be delivered by the service delivery system 20. Herein, assume that the service provider sells the application service by wholesale. The application service is sold on a subscription basis. The application service refers to, for example, delivering an application to a computer of a user, such as a customer, to allow the user to use the application on the computer, or providing, to the computer, processing for allowing the computer to upgrade the application to a newer version.

The system 10 includes a provider terminal 30, such as a PC, a smartphone or a tablet terminal, for use by the service provider. The system 10 includes one or more provider terminals 30 like those just described.

The system 10 includes a seller terminal 40, such as a PC, a smartphone or a tablet terminal, for use by a seller. The system 10 includes one or more seller terminals 40 like those just described.

The system 10 includes an electronic device, such as a PC, a smartphone, a tablet terminal or an MFP (multifunction peripheral), for use by a customer. The system 10 includes one or more electronic devices 50 like those just described. The customers access the service delivery system 20 via their electronic devices 50 and use via the electronic devices 50 the application service delivered by the service delivery system 20.

The service delivery system 20, the provider terminal 30, the seller terminal 40, and the electronic device 50 adopt a configuration in which they communicate with each other via a network 11, such as, for example, a LAN (local area network) or the Internet.

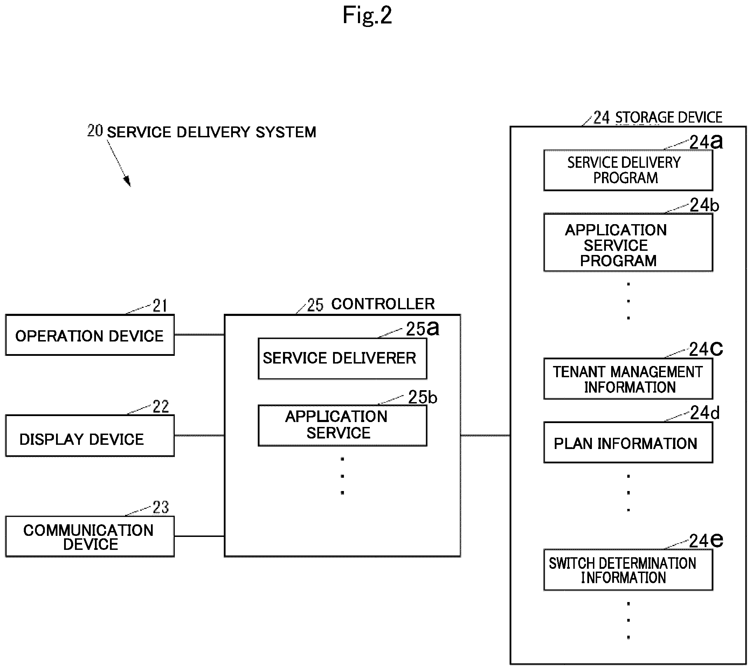

FIG. 2 is a block diagram of the service delivery system 20 when constituted by a single computer.

As shown in FIG. 2, the service delivery system 20 includes: an operation device 21, such as a keyboard or a mouse, to which various operations are to be input; a display device 22, such as an LCD (liquid crystal display), on which various information is to be displayed; a communication device 23 that communicates with external devices via the network, such as a LAN or the Internet, or directly by wire or wireless without a network; a non-volatile storage device 24, such as a semiconductor memory or an HDD (hard disk drive), that stores various information; and a controller 25 that controls the entire service delivery system 20.

The storage device 24 stores a service delivery program 24a that allows the controller 25 to execute processing for delivering an application service to users. The service delivery program 24a may be installed on the service delivery system 20, for example, in the manufacturing stage of the service delivery system 20, may be previously stored in an external storage medium, such as a USB (universal serial bus) memory, and additionally installed on the service delivery system 20 from the external storage medium, or may be additionally installed on the service delivery system 20 over the network.

The storage device 24 further stores an application service program 24b that allows the controller 25 to execute the application service to be delivered to users. The storage device 24 stores application service programs 24b on the basis of individual application services. Each of the application service programs may be installed on the service delivery system 20, for example, in the manufacturing stage of the service delivery system 20, may be additionally installed on the service delivery system 20 from an external storage medium, such as a USB memory, or may be additionally installed on the service delivery system 20 over the network.

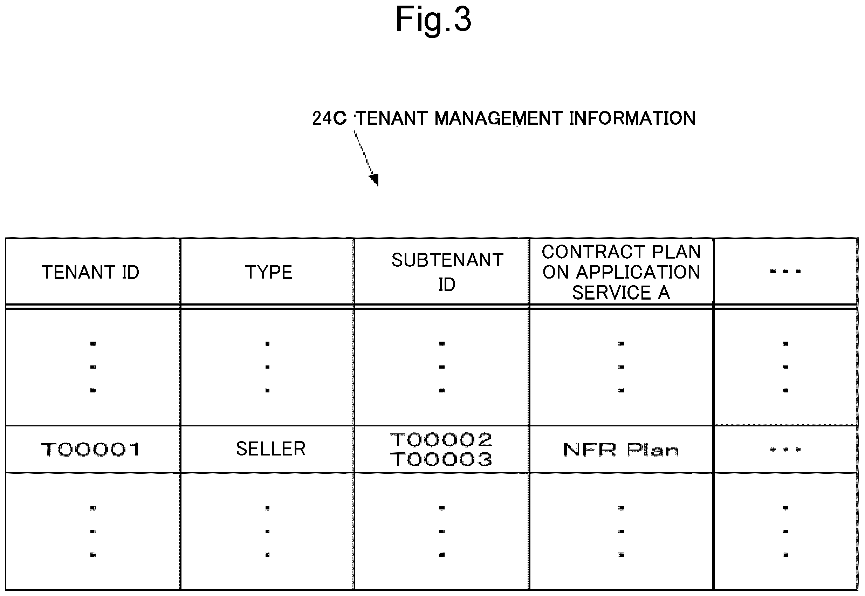

The storage device 24 further stores tenant management information 24c for use in managing tenants in the service delivery system 20. FIG. 3 is a table showing an example of tenant management information 24c.

As shown in FIG. 3, the tenant management information 24c contains, as items for each tenant, a tenant ID as identification information on the tenant, a type of tenant, such as seller or customer, a plan on an application service for which the tenant has a contract, and subtenant IDs of subtenants belonging to the tenant, by associating these items with each other. When the tenant has contracts for respective plans on a plurality of application services, the tenant management information 24c contains the current contract plans on the basis of individual application services. The tenant management information 24c shown in FIG. 3 shows only a portion thereof by omitting the other portions.

A seller as a tenant sets, on behalf of a subtenant belonging to the seller itself, a plan for which the subtenant may make a contract. Here, each tenant is assumed to be able to make a contract for a single plan on each application service. When having a contract for a plan on an application service, the tenant can use the application service in a range of the contract plan.

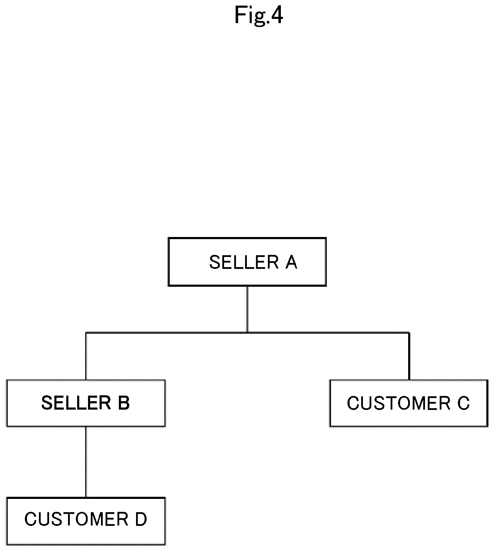

FIG. 4 is a diagram showing an example of the relationship between tenants being managed according to the tenant management information 24c.

As shown in FIG. 4, a seller A manages a seller B and a customer C. In other words, the seller B and the customer C are subtenants belonging to the seller A. The seller B manages a customer D. In other words, the customer D is a subtenant belonging to the seller B.

As shown in FIG. 2, the storage device 24 stores plan information 24d indicating a list of plans for using an application service. The plan information 24d stored in the storage device 24 comprises one or more pieces of plan information each indicating a list of plans for using an application service. The storage device 24 can store a single piece of plan information for each individual application service.

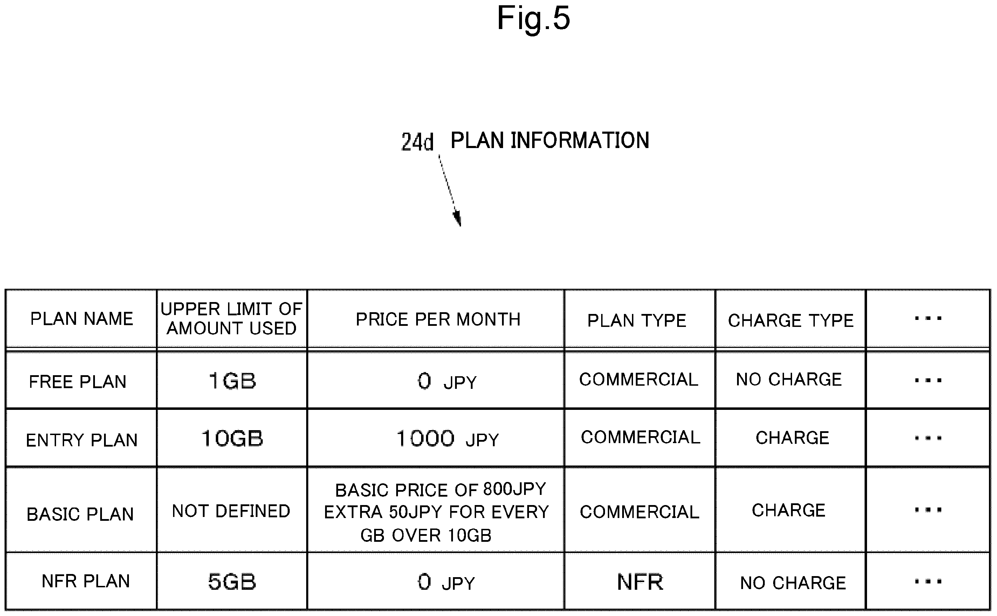

FIG. 5 is a table showing an example of the plan information 24d. The plan information 24d shown in FIG. 5 is information indicating the contents of plans and is plan information for a storage service which is an application service for storing user's data.

As shown in FIG. 5, the plan information 24d contains, as items for each plan, the name of the plan, i.e., a plan name, an upper limit of the amount of storage used allowable for the plan, a price of the plan, a plan type indicating the type of the plan, and a charge type indicating the presence or absence of an extra charge system in the plan, by associating these items with each other. The plan information 24d shown in FIG. 5 shows only a portion thereof by omitting the other portions.

The period of time subject to payment for the storage service for which the plan information 24d shown in FIG. 5 is intended is one month. In other words, the prices for the plans are monthly.

The plan information 24d shown in FIG. 5 shows: "Free Plan" in which the storage can be used up to 1 GB for 0 JPY (Japanese currency "yen") a month; "Entry Plan" in which the storage can be used up to 10 GB for 1,000 JPY a month; "Basic Plan" in which the basic price is 800 JPY a month and extra 50 JPY are added thereto for every GB over 10 GB when the maximum amount of storage used in the period of time subject to payment is over 10 GB; and "NFR Plan" as an NFR (not for resale) plan in which the storage can be used up to 5 GB for 0 JPY a month.

The "NFR Plan" is a plan for sellers. In order for the sellers to demonstrate the storage service to sub-sellers belonging to the sellers themselves, the sellers set the "NFR Plan" as a plan for which the sub-sellers can make a contract. For the purpose of sales promotion of the storage service, the sellers, including sub-sellers, having contracts for the "NFR Plan" present the features of the storage service to customers of the sellers themselves by using the storage service in the presence of the customers.

The "Free Plan", "Entry Plan", and "NFR Plan" are monthly flat-rate plans. The "Basic Plan" is a monthly pay-per-use plan.

The charge type includes, for example, "No charge" representing the lack of an extra charge system and "Charge" representing the presence of an extra charge system. The charge types of the "Free Plan" and the "NFR Plan" are "No charge". The charge types of the "Entry Plan" and the "Basic Plan" are "Charge".

The plan type includes, for example, "Commercial" representing that the plan is for sale to customers and "NFR" representing that the plan is not for sale to customers. The plan types of the "Free Plan", the "Entry Plan", and the "Basic Plan" are "Commercial". The plan type of the "NFR Plan" is "NFR".

In this embodiment, the expiration date of the contract for the storage service for which the plan information 24d shown in FIG. 5 is intended is not fixed. In other words, the contract is continued until the tenant requests the cancellation thereof. When the tenant requests the cancellation of the contract, the contract is cancelled at the end of the period of time subject to payment within which the date of the request falls.

As shown in FIG. 2, the storage device 24 stores switch determination information 24e which is information for determining whether or not to switch plans for using an application service. The switch determination information 24e stored in the storage device 24 comprises at least one piece of switch determination information. The storage device 24 stores a single piece of switch determination information for each individual application service.

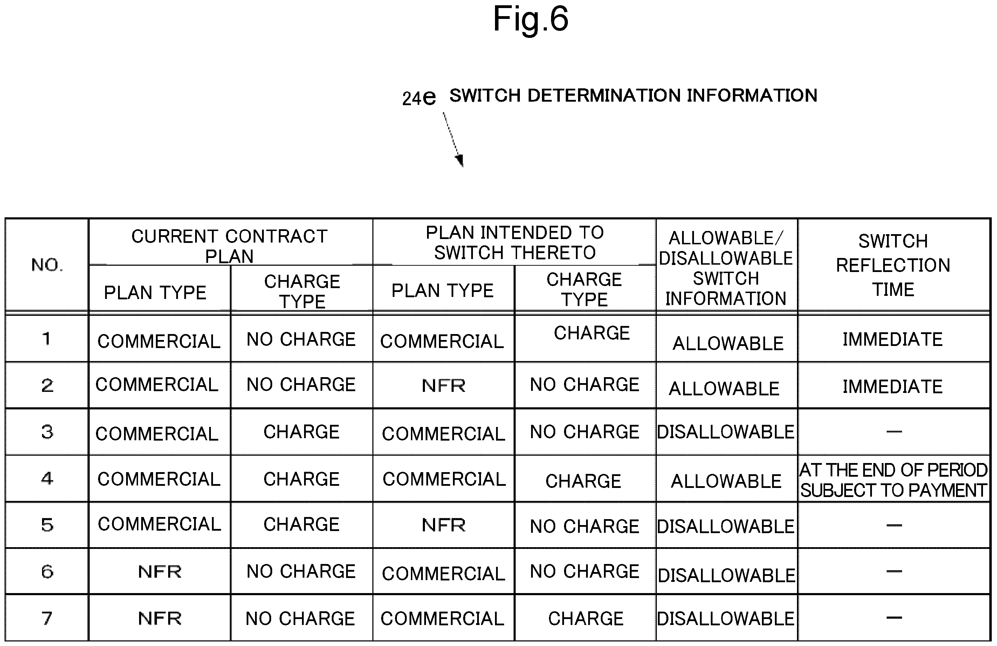

FIG. 6 is a table showing an example of the switch determination information 24e. The switch determination information 24e is information for use in determining whether or not to switch plans for the above-described storage service.

As shown in FIG. 6, the switch determination information 24e contains, as items for each pattern of switching plans, the number (No.) for identifying the pattern of switching plans, the plan type and charge type of a current contract plan, the plan type and charge type of a plan intended to switch thereto, allowable/disallowable switch information indicating that the plan switch is allowable or disallowable, and a time when the plan switch is reflected in the service (hereinafter, referred to as a "switch reflection time") in the case where the plan switch is allowable, by associating these items with each other.

The controller 25 shown in FIG. 2 at least includes, for example, a processor, such as a CPU (central processing unit), a ROM (read only memory) that holds programs and various types of data, and a RAM (random access memory) as a memory for use as a working area for the processor. The processor of the controller 25 operates in accordance with a program stored in the storage device 24 or the ROM of the controller 25.

The controller 25 executes the service delivery program 24a and, thus, operates as a service deliverer 25a that executes processing for delivering the application service to users.

The controller 25 further executes the application service program 24b and, thus, operates as an application service performer 25b that performs the application service. Likewise, the controller 25 executes individual application service programs and, thus, operates as an application service performer for each application service program.

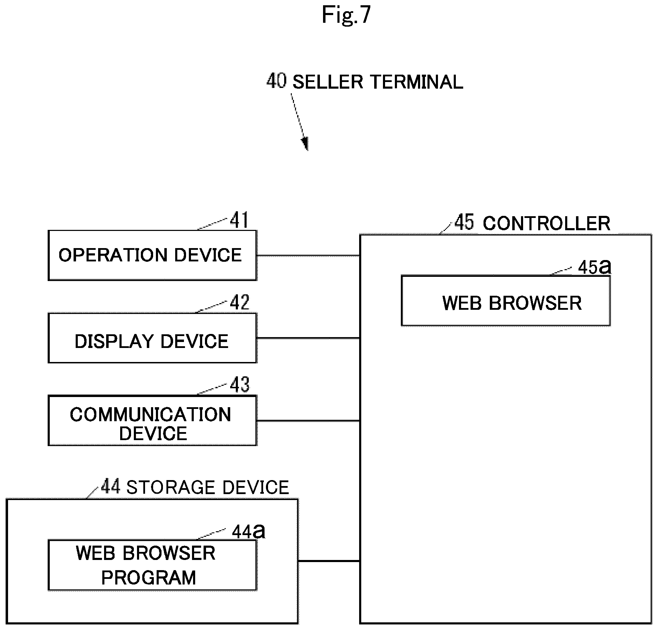

FIG. 7 is a block diagram of an example of the seller terminal 40. As shown in FIG. 7, the seller terminal 40 includes: an operation device 41, such as a keyboard or a mouse, to which various operations are to be input; a display device 42, such as an LCD (liquid crystal display), on which various information is to be displayed; a communication device 43 that communicates with external devices via the network, such as a LAN or the Internet, or directly by wire or wireless without a network; a non-volatile storage device 44, such as a semiconductor memory or an HDD (hard disk drive), that stores various information; and a controller 45 that controls the entire seller terminal 40.

The storage device 44 stores a web browser program 44a. The web browser program 44a may be installed on the seller terminal 40, for example, in the manufacturing stage of the seller terminal 40, may be additionally installed on the seller terminal 40 from an external storage medium, such as a USB memory, or may be additionally installed on the seller terminal 40 over the network.

The controller 45 at least includes, for example, a processor, such as a CPU (central processing unit), a ROM (read only memory) that holds programs and various types of data, and a RAM (random access memory) as a memory for use as a working area for the processor. The processor of the controller 45 operates in accordance with a program stored in the storage device 44 or the ROM of the controller 45.

The controller 45 executes the web browser program 44a and, thus, operates as a web browser 45a.

The seller accesses a web site provided by the service delivery system 20 from the web browser 45a of the seller terminal 40 and logs in to the service delivery system 20 via the web site. Communications between the seller terminal 40 and the service delivery system 20 are performed through the web browser 45a of the seller terminal 40 and the web site provided by the service delivery system 20.

Next, a description will be given of operations of the system 10. First, a description will be given of an operation of the service delivery system 20 when the service provider changes various information.

The service provider accesses the service delivery system 20 from a provider terminal and instructs the service delivery system 20 to change, among various types of information managed by the service delivery system 20, information which the service provider is allowed to change. The service deliverer 25a of the service delivery system 20 changes the information in response to the above instruction from the service provider. In this manner, the service provider changes, for example, plan information, switch determination information or so on managed by the service delivery system 20.

Next, a description will be given of an operation of the service delivery system 20 when a seller changes various information.

The seller accesses the service delivery system 20 from a seller terminal 30 and inputs to the operation device 21 a change instruction to change, among various types of information managed by the service delivery system 20, information which the seller is allowed to change. When the change instruction is input to the operation device 21, the service deliverer 25a of the service delivery system 20 changes the information according to the contents indicated by the change instruction from the seller. Therefore, regarding the tenant management information managed by the service delivery system 20, the seller can newly add data on a tenant as a subtenant belonging to the seller itself or switch contract plans on the application service on behalf of subtenants belonging to the seller itself.

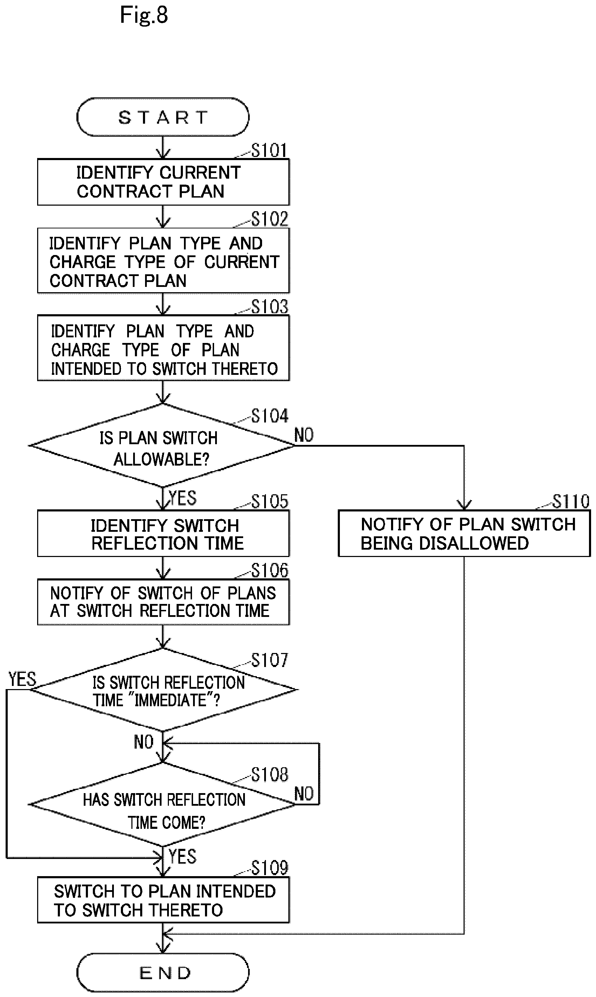

Next, a description will be given of an operation of the service delivery system 20 when an instruction to switch contract plans on an application service is issued. FIG. 8 is a flowchart of the operation of the service delivery system 20 upon issuance of an instruction to switch contract plans on an application service.

When receiving an instruction to switch contract plans on an application service (hereinafter, referred to as a "plan switch instruction") from a seller terminal 30 (hereinafter, referred to as a "target seller terminal"), the service deliverer 25a of the service delivery system 20 executes the operation shown in FIG. 8.

Hereinafter, assume that the plan information 24d shown in FIG. 5 comprises plan information on an application service (hereinafter, referred to as a "target application service") being subject to a plan switch instruction (hereinafter, referred to as a "target plan switch instruction") received from the target seller terminal 30. Furthermore, assume that reference is made to the switch determination information 24a in FIG. 6 as switch determination information on the target application service.

As shown in FIG. 8, in accordance with the switch instruction, the service deliverer 25a identifies, based on the tenant management information 24c, the current contract plan on the target application service for a tenant intending to change plans (hereinafter, referred to as a "target tenant"), the current contract plan being indicated by the switch instruction (S101).

When the processing in S101 ends, the service deliverer 25a identifies, based on the plan information 24d, the plan type and the contents of the charge type of the current contract plan identified in S101 (S102).

When the processing in S102 ends, the service deliverer 25a identifies, based on the plan information 24d, the plan type and the contents of the charge type of the plan intended to switch thereto, the plan being indicated by the target plan switch instruction (S103).

When the processing in S103 ends, the service deliverer 25a determines whether the switch of plans indicated by the target plan switch instruction is allowable or disallowable, based on allowable/disallowable switch information associated, in the switch determination information 24e, with a combination of the plan type and the contents of the charge type each identified in S102, i.e., the plan type and the contents of the charge type of the current contract plan, with the plan type and the contents of the charge type of the plan intended to switch thereto, which have been identified in S103 (S104).

When determining in S104 that the switch of plans indicated by the target plan switch instruction is allowable (YES in S104), the service deliverer 25a identifies a switch reflection time associated, in the switch determination information 24e, with the combination of: the plan type and the contents of the charge type of the current contract plan; and the plan type and the contents of the charge type of the plan intended to switch thereto, which have been identified in S103 (S105).

When the processing in S105 ends, the service deliverer 25a notifies the target seller terminal 30 having sent the above change instruction, through the communication device 23, of a message that the current contract plan on the target application service will be switched to the plan intended to switch thereto, which has been indicated by the target plan switch instruction, when the switch reflection time identified in S105 comes (S106).

When the processing in S106 ends, the service deliverer 25a determines whether the switch reflection time identified in S105 is "immediate" or not (S107).

When determining in S107 that the switch reflection time identified in S105 is not "immediate" (NO in S107), the service deliverer 25a determines whether or not the current date and time has reached the switch reflection time identified in S105 (S108).

When determining in S107 that the switch reflection time identified in S105 is "immediate" (YES in S107) or when determining in S108 that the current date and time has reached the switch reflection time identified in S105 (YES in S108), the service deliverer 25a executes processing for switching the contract plan on the target application service to the plan intended to switch thereto, which has been indicated by the above switch instruction (S109). Specifically, the service deliverer 25a rewrites the contract plan on the target application service for the target tenant in the tenant management information 24c into the plan intended to switch thereto, which has been indicated by the target plan switch instruction.

When determining in S104 that the switch of plans indicated by the target plan switch instruction is disallowable (NO in S104), the service deliverer 25a notifies the target seller terminal 30 having sent the above change instruction, through the communication device 23, of a message that the contract plan on the target application service cannot be switched to the plan intended to switch thereto, which has been indicated by the target plan switch instruction (S110).

When the processing in S109 or the processing in S110 ends, the service deliverer 25a ends the operation shown in FIG. 8.

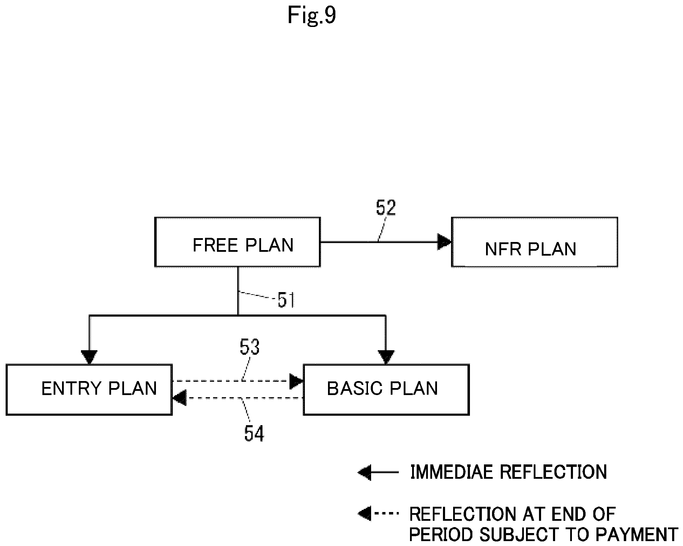

FIG. 9 is a diagram showing by arrows examples of switches to be allowed according to the operation shown in FIG. 8. In FIG. 9, the switch 51 from "Free Plan" to "Entry Plan" or "Basic Plan" corresponds to pattern No. 1 in the switch determination information 24e and will be therefore immediately made.

The switch 52 from "Free Plan" to "NFR Plan" corresponds to pattern No. 2 in the switch determination information 24e and will be therefore immediately made.

The switch 53 from "Entry Plan" to "Basic Plan" and the switch 54 from "Basic Plan" to "Entry Plan" correspond to pattern No. 4 in the switch determination information 24e and will be therefore made at the end of the period of time subject to payment. The monthly flat-rate system can be easily applied to a simple daily pro-rata calculation. On the other hand, the monthly pay-per-use billing system is difficult to apply to a simple daily pro-rata calculation. Therefore, as for the switch determination information 24e, the switch between the monthly flat-rate "Entry Plan" and the monthly pay-per-use "Basic Plan" is made at the end of the period of time subject to payment.

The switch from "Entry Plan" or "Basic Plan" to "Free Plan" corresponds to pattern No. 3 in the switch determination information 24e and is therefore disallowed.

The switch from "Entry Plan" or "Basic Plan" to "NFR Plan" corresponds to pattern No. 5 in the switch determination information 24e and is therefore disallowed. The "Entry Plan" and the "Basic Plan" are basically plans for customers. Therefore, tenants having contracts for the "Entry Plan" or the "Basic Plan" are normally customers. On the other hand, the "NFR Plan" is a plan for sellers as described previously. Therefore, the switch determination information 24e is designed to prevent customers from making contracts for the "NFR Plan" for sellers.

The switch from "NFR Plan" to "Free Plan" corresponds to pattern No. 6 in the switch determination information 24e and is therefore disallowed. The switch from "NFR Plan" to "Entry Plan" or "Basic Plan" corresponds to pattern No. 7 in the switch determination information 24e and is therefore disallowed. The "NFR Plan" is a plan for sellers as described previously. Therefore, tenants having contracts for the "NFR Plan" are normally sellers. On the other hand, the "Free Plan", the "Entry Plan", and the "Basic Plan" are basically plans for customers. Therefore, tenants having contracts for the "Free Plan", the "Entry Plan" or the "Basic Plan" are normally customers. Hence, in the switch determination information 24e, the switch from "NFR Plan" to "Free Plan", "Entry Plan" or "Basic Plan" is forbidden. Thus, reuse of accounts by tenants is prevented.

The switch determination information 24e is merely illustrative. Which pattern of switching plans are to be allowed or not and the switch reflection time in allowing the switch of plans can be freely changed by the service provider rewriting the switch determination information 24e.

As thus far described, when an instruction to switch from a current plan for which a tenant has a contract to another plan intended to switch thereto is issued, the service delivery system 20 determines whether the switch of plans is allowable or disallowable based on a combination of a nature of the current plan intended to switch therefrom and a nature of the plan intended to switch thereto and the switch determination information 24e (S101 to S104), keeps from making the switch of plans when the switch of plans is determined to be disallowable (NO in S104), and makes the switch of plans when the switch of plans is determined to be allowable (YES in S104). Thus, the possibility of occurrence of an inappropriate switch of plans not indicated by the switch determination information 24e can be reduced. Therefore, when a seller instructs the service delivery system 20 to switch from a plan for which a customer has a contract to another plan, the service delivery system 20 can reduce the possibility of occurrence of the above inappropriate switch of plans, for example, even if the seller is out of management by the service provider and does not sufficiently understand the natures of plans, the agreement of sellers with the service provider, and so on.

When an instruction to switch from a current plan for which a tenant has a contract to another plan intended to switch thereto is issued, the service delivery system 20 identifies the time to reflect the switch of plans in the service based on a combination of a nature of the current plan intended to switch therefrom and a nature of the plan intended to switch thereto and the switch determination information 24e (S101 to S103 and S105), and makes the switch of plans at the time identified in S105 (S107 to S109) when the switch of plans is determined to be allowable (YES in S104). Therefore, the possibility of occurrence of a switch of plans at an inappropriate time not indicated by the switch determination information 24e can be reduced.

When an instruction to switch from a current plan for which a tenant has a contract to another plan intended to switch thereto is issued, the service delivery system 20 determines whether the switch of plans is allowable or disallowable based on a combination of the type of the current plan intended to switch therefrom and the type of the plan intended to switch thereto and the switch determination information 24e. Therefore, the possibility of occurrence of the above inappropriate switch of plans regarding the type of plan can be reduced.

When an instruction to switch from a current plan for which a tenant has a contract to another plan intended to switch thereto is issued, the service delivery system 20 determines whether the switch of plans is allowable or disallowable based on a combination of information on the presence or absence of an extra charge system in the current contract plan intended to switch therefrom and information on the presence or absence of an extra charge system in the plan intended to switch thereto and the switch determination information 24e. Therefore, the possibility of occurrence of the above inappropriate switch of plans regarding the presence or absence of an extra charge system in plans can be reduced.

In this embodiment, the service delivery system 20 determines, based on the plan type and the charge type as natures of plans, whether the switch of plans is allowable or disallowable and the time to reflect the switch of plans in the service in allowing the switch of plans. However, the service deliverer 25a may determine, based on only one of the plan type and the charge type, whether the switch of plans is allowable or disallowable and the time to reflect the switch of plans in the service in allowing the switch of plans. For example, the service deliverer 25a does not make any determination based on the plan type in the case where the "NFR Plan" does not exist as a plan on the service. Furthermore, the service deliverer 25a does not make any determination based on the charge type in the case where any plan free of extra charge does not exist as a plan on the service.

As described above, in this embodiment, the service deliverer 25a determines, based on the plan type and the charge type as natures of plans, whether the switch of plans is allowable or disallowable and the time to reflect the switch of plans in the service in allowing the switch of plans (S104). However, the service deliverer 25a may determine, based on a nature of plans other than the plan type and the charge type, whether the switch of plans is allowable or disallowable and the time to reflect the switch of plans in the service in allowing the switch of plans.

Next, a description will be given of a service delivery system and a service delivery program according to a second embodiment as one aspect of the present invention with reference to the drawings. No further description of the same structure, configuration, and processing as those in the above-described first embodiment will be given. In other words, the structure, configuration, and processing not otherwise specified in the second embodiment below are the same as those in the first embodiment.

### <Second Embodiment>

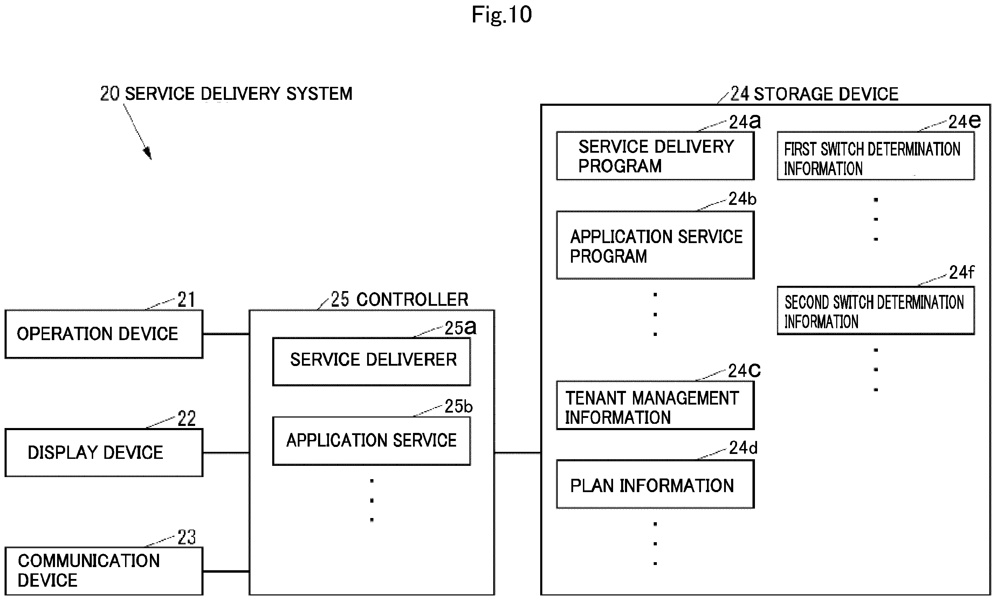

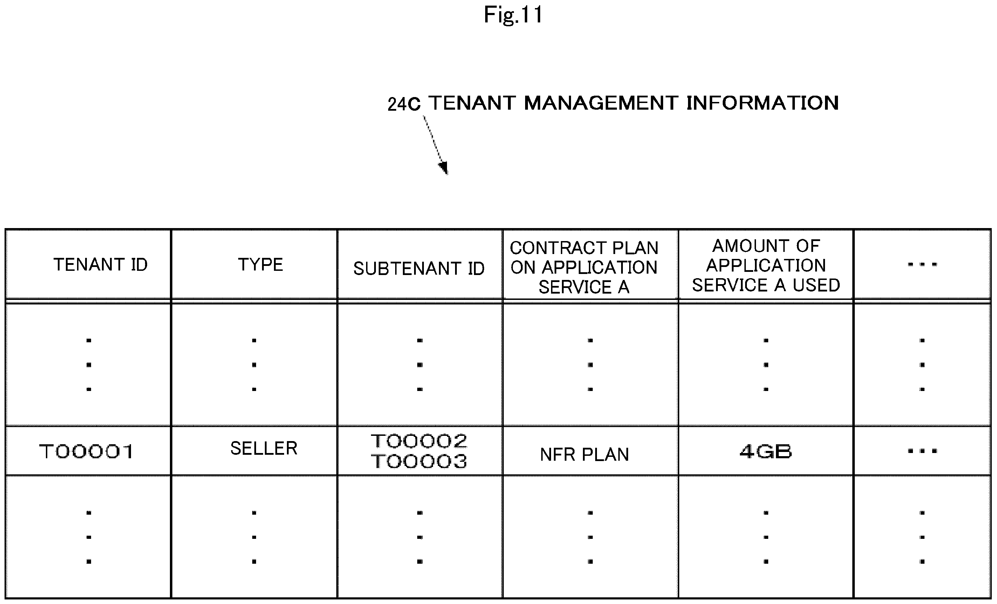

FIG. 10 is a block diagram showing the configuration of a service delivery system 20 according to a second embodiment. FIG. 11 is a table showing an example of contents of tenant management information 24c for use in the service delivery system 20 according to the second embodiment.

The tenant management information 24c used in the second embodiment contains, as items for each tenant, a tenant ID as identification information on the tenant, a type of tenant, such as seller or customer, a plan on an application service for which the tenant has a contract to use the application service, subtenant IDs of subtenants belonging to the tenant, and, furthermore, the amount of application service used by the tenant, by associating these items with each other. When the tenant has contracts for respective plans on a plurality of application services, the tenant management information 24c contains, for each individual application service, a current plan for which the tenant has a contract and the amount of application service used by the tenant. The tenant management information 24c shown in FIG. 11 also shows only a portion thereof by omitting the other portions.

Each time the actual amount of application service used by the tenant changes, a service deliverer 25a (see FIG. 10) updates the "Amount of Application Service A used" in the tenant management information 24c to the same value as the actual amount of application service used by the tenant.

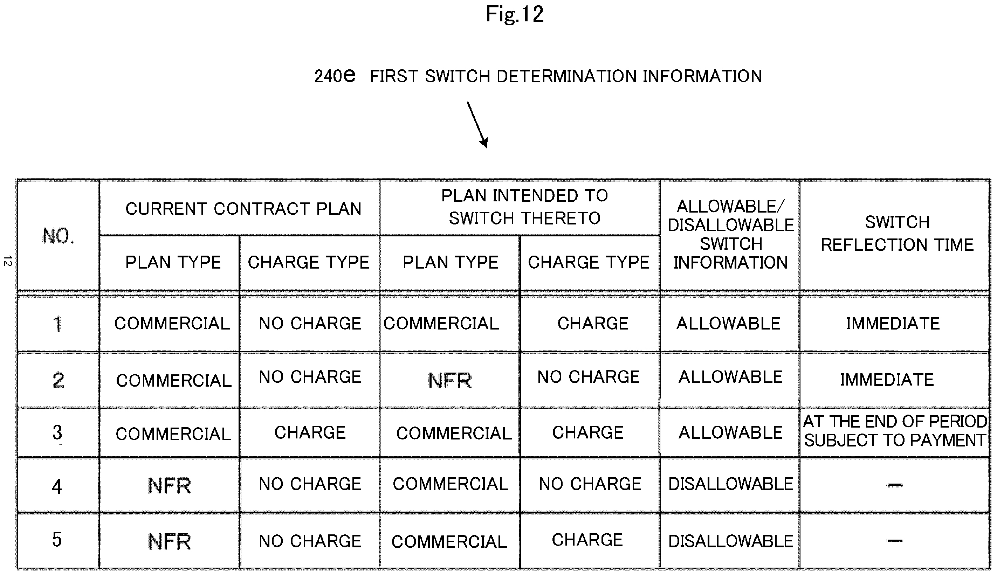

In the service delivery system 20 according to the second embodiment, as shown in FIG. 10, a storage device 24 stores, as information for determining whether or not to switch plans for using an application service, first switch determination information 240e and second switch determination information 24f. The storage device 24 stores at least one of the first switch determination information 240e. The first switch determination information 240e stored in the storage device 24 comprises at least one piece of first switch determination information. The second switch determination information 24f is information for determining whether or not to switch plans for using an application service and is partially different in contents from the first switch determination information 240e. The storage device 24 stores at least one of the second switch determination information 24f. The second switch determination information 24f stored in the storage device 24 comprises at least one piece of second switch determination information. The storage device 24 stores, for each individual application service, a single piece of first switch determination information 240e and a single piece of second switch determination information 24f. The first switch determination information 240e is similar to the switch determination information 24e in the first embodiment, but, in the second embodiment, will be described using an example shown in FIG. 12. FIG. 12 is a table showing an example of switch determination information 240e. The switch determination information 240e shown in FIG.12 is information for use in determining whether or not to switch plans for the above-described storage service. As shown in FIG. 12, the switch determination information 240e contains, as items for each pattern of switching plans, the number (No.) for identifying the pattern of switching plans, the plan type and charge type of a current contract plan, the plan type and charge type of a plan intended to switch thereto, allowable/disallowable switch information indicating that the plan switch is allowable or disallowable, and a time when the plan switch is reflected in the service (hereinafter, referred to as a "switch reflection time") in the case where the plan switch is allowable, by associating these items with each other.

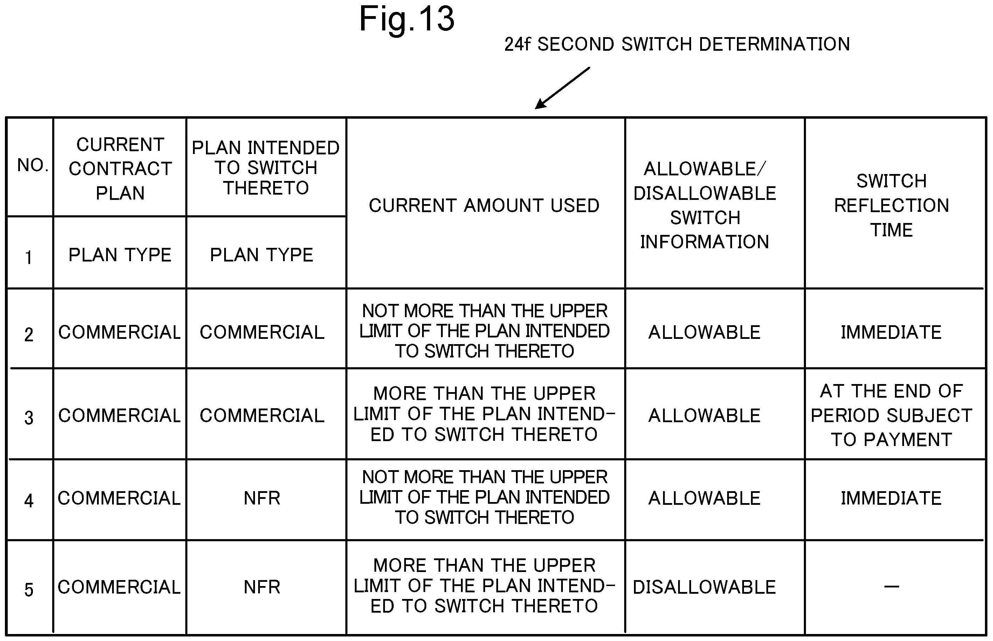

The second switch determination information 24f will be described below. FIG. 13 is a table showing an example of the second switch determination information 24f. As shown in FIG. 13, the second switch determination information 24f contains, as items for each pattern of switching plans, the number (No.) for identifying the pattern of switching plans, the plan type of a latest (hereinafter, referred to as "current") contract plan, the plan type of a plan intended to switch thereto, the latest (hereinafter, referred to as "current") amount of application service used, allowable/disallowable switch information indicating that the switch of plans is allowable or disallowable, and a switch reflection time in the case where the switch of plans is allowable, by associating these items with each other.

In these circumstances, the service provider accesses the service delivery system 20 from a provider terminal and instructs the service delivery system 20 to change, among various types of information managed by the service delivery system 20, information which the service provider is allowed to change. The service deliverer 25a of the service delivery system 20 changes the information in response to the above instruction from the service provider. Thus, the service provider can change, for example, plan information, first switch determination information 240e, second switch determination information 24f or so on managed by the service delivery system 20.

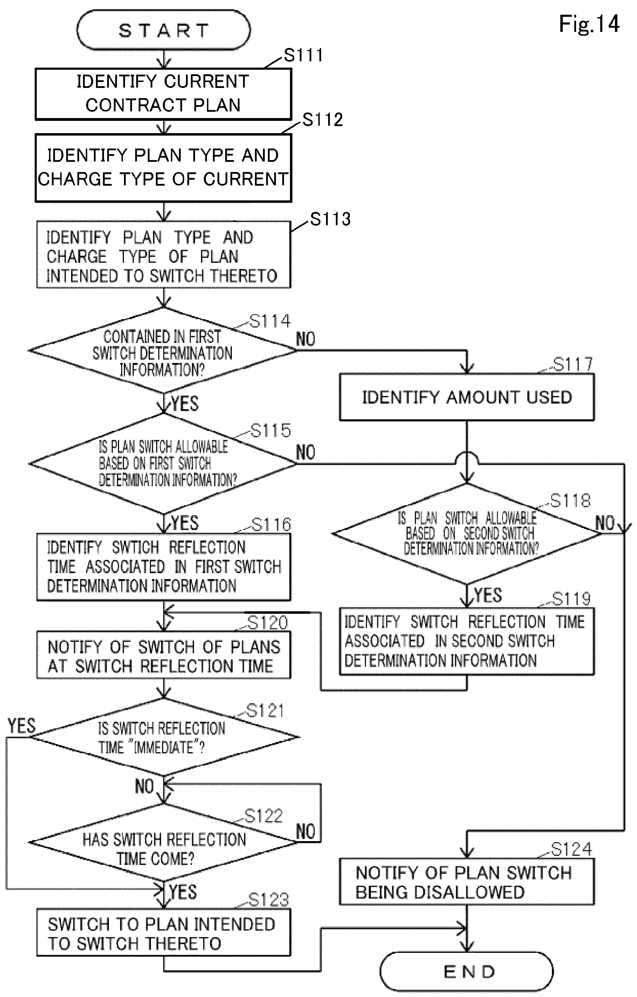

Next, a description will be given of an operation of the service delivery system 20 according to the second embodiment when an instruction to switch contract plans on an application service is issued. FIG. 14 is a flowchart of the operation performed by the service delivery system 20 according to the second embodiment upon issuance of an instruction to switch contract plans on an application service.

When receiving an instruction to switch contract plans on an application service (hereinafter, referred to as a "plan switch instruction") from a seller terminal (hereinafter, referred to as a "target seller terminal"), the service deliverer 25a of the service delivery system 20 executes the operation shown in FIG. 14.

Hereinafter, assume that plan information on a target application service indicated as a service intended to change plans by the plan switch instruction received from the target seller terminal is the plan information 24d shown in FIG. 5. Furthermore, assume that first switch determination information on the target application service is the switch determination information 240e in FIG. 12. Moreover, assume that reference is made to the second switch determination information 24f in FIG. 13 as second switch determination information on the target application service.

As shown in FIG. 14, in accordance with the plan switch instruction, the service deliverer 25a identifies, based on the tenant management information 24c, the current contract plan on the target application service for a target tenant, the current contract plan being indicated by the target plan switch instruction (S111).

When the processing in S111 ends, the service deliverer 25a identifies, based on the plan information 24d, the plan type and the contents of the charge type (hereinafter, referred to simply as the charge type) of the contract plan identified in S111 (S112).

When the processing in S112 ends, the service deliverer 25a identifies, based on the plan information 24d, the plan type and charge type of the plan intended to switch thereto, both indicated by the target plan switch instruction (S113).

When the processing in S113 ends, the service deliverer 25a determines whether or not a combination of the plan type and charge type identified in S112, i.e., the plan type and charge type of the current (latest at this point in time, the same applies hereinafter) contract plan, and the plan type and charge type of the plan intended to switch thereto identified in S113 is contained in the first switch determination information 240e (S114). When determining in S114 that the combination of the plan type and charge type of the current contract plan identified in S112 and the plan type and charge type of the plan intended to switch thereto identified in S113 is contained in the first switch determination information 240e (YES in S114), the service deliverer 25a determines, by reference to the first switch determination information 240e, whether the switch of plans indicated by the target plan switch instruction is allowable or disallowable, based on allowable/disallowable switch information associated with the combination of the plan type and charge type identified in S112, i.e., the plan type and charge type of the current contract plan, and the plan type and charge type of the plan intended to switch thereto identified in S113 (S115).

When determining in S115 that the switch of plans indicated by the target plan switch instruction is allowable (YES in S115), the service deliverer 25a identifies, by reference to the first switch determination information 240e, a switch reflection time associated with the combination of the plan type and charge type of the current contract plan identified in S112 and the plan type and charge type of the plan intended to switch thereto identified in S113 (S116).

On the other hand, when determining in S114 that the combination of the plan type and charge type of the current contract plan identified in S112 and the plan type and charge type of the plan intended to switch thereto identified in S113 is not contained in the first switch determination information 240e (NO in S114), the service deliverer 25a identifies the amount of target application service used by the target tenant, based on the tenant management information 24c (see FIG. 11) (S117).

When the processing in S117 ends, the service deliverer 25a determines, by reference to the second switch determination information 24f, whether the switch of plans indicated by the target plan switch instruction is allowable or disallowable, based on allowable/disallowable switch information associated with a combination of the plan type identified in S112, i.e., the plan type of the current contract plan, the plan type of the plan intended to switch thereto identified in S113, and the amount of target application service used identified in S117 (S118).

When determining in S118 that the switch of plans indicated by the target plan switch instruction is allowable (YES in S118), the service deliverer 25a identifies, by reference to the second switch determination information 24f, a switch reflection time associated with the combination of the plan type of the current contract plan identified in S112, the plan type of the plan intended to switch thereto identified in S113, and the amount of target application service used identified in S117 (S119).

In the same manner as described previously, when the processing in S116 or the processing in S119 ends, the service deliverer 25a notifies the target seller terminal, through the communication device 23, of a message that the current contract plan on the target application service will be switched to the plan intended to switch thereto, which has been indicated by the target plan switch instruction, when the switch reflection time identified in S116 or S119 comes (S120).

When the processing in S120 ends, the service deliverer 25a determines whether the switch reflection time identified in S116 or S119 is "immediate" or not (S121).

When determining in S121 that the switch reflection time identified in S116 or S119 is not "immediate" (NO in S1021), the service deliverer 25a determines whether or not the current date and time has reached the switch reflection time identified in S115 (S122).

When determining in S121 that the switch reflection time is "immediate" (YES in S121) or when determining in S122 that the current date and time has reached the above identified switch reflection time (YES in S122), the service deliverer 25a executes processing for switching the contract plan on the target application service to the plan intended to switch thereto, which has been indicated by the target plan switch instruction (S123). Thus, the service deliverer 25a rewrites the contract plan on the target application service for the target tenant in the tenant management information 24c into the plan intended to switch thereto indicated by the target plan switch instruction.

When determining in S115 or S118 that the switch of plans indicated by the target plan switch instruction is disallowable (NO in S115 or NO in S118), the service deliverer 25a notifies the target seller terminal, through the communication device 23, of a message that the contract plan on the target application service cannot be switched to the plan intended to switch thereto, which has been indicated by the target plan switch instruction (S124).

When the processing in S123 or the processing in S124 ends, the service deliverer 25a ends the operation shown in FIG. 14.

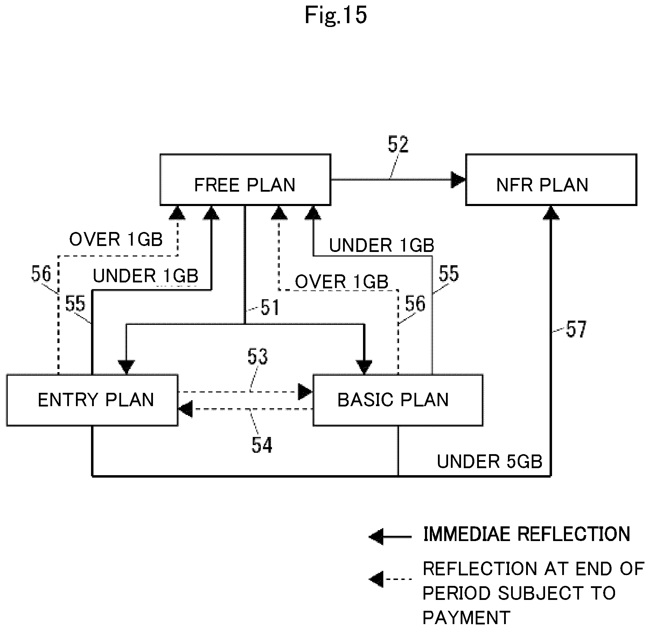

FIG. 15 is a diagram showing by arrows switches to be allowed according to the operation shown in FIG. 14.

In FIG. 15, the switch 51 from "Free Plan" to "Entry Plan" or "Basic Plan" corresponds to pattern No. 1 in the first switch determination information 240e and will be therefore immediately made.

The switch 52 from "Free Plan" to "NFR Plan" corresponds to pattern No. 2 in the first switch determination information 240e and will be therefore immediately made.

The switch 53 from "Entry Plan" to "Basic Plan" and the switch 54 from "Basic Plan" to "Entry Plan" correspond to pattern No. 3 in the first switch determination information 240e and will be therefore made at the end of the period of time subject to payment. The monthly flat-rate system can be easily applied to a simple daily pro-rata calculation. On the other hand, the monthly pay-per-use billing system is difficult to apply to a simple daily pro-rata calculation. Therefore, according to the first switch determination information 240e, the switch between the monthly flat-rate "Entry Plan" and the monthly pay-per-use "Basic Plan" is made at the end of the period of time subject to payment.

When the amount of target application service used is not more than 1 GB which is the upper limit thereof in the "Free Plan", the switch 55 from "Entry Plan" or "Basic Plan" to "Free Plan" corresponds to pattern No. 1 in the second switch determination information 24f and will be therefore immediately made.

When the amount of target application service used is more than 1 GB which is the upper limit thereof in the "Free Plan", the switch 56 from "Entry Plan" or "Basic Plan" to "Free Plan" corresponds to pattern No. 2 in the second switch determination information 24f and will be therefore made at the end of the period of time subject to payment. When, in setting the switch reflection time for the switch from "Entry Plan" or "Basic Plan" to "Free Plan", not to "immediate", but to the end of the period of time subject to payment, the actual amount of application service used is more than the upper limit of the amount of application service used for the "Free Plan" at the time of issuance of an instruction to switch from "Entry Plan" or "Basic Plan" to "Free Plan", the customer can obtain the benefit of reducing the actual amount of application service used to not more than the upper limit of the amount of application service used for the "Free Plan", until the end of the period of time subject to payment. When the actual amount of application service used is more than the upper limit of the amount of application service used for the "Free Plan" at the time of switch from "Entry Plan" or "Basic Plan" to "Free Plan", the service deliverer 25a may only allow the customer to delete customer's data saved in the application service, for example, until the actual amount of application service used reaches not more than the upper limit of the amount of application service used for the "Free Plan".

When the amount of target application service used is not more than 5 GB which is the upper limit thereof in the "NFR Plan", the switch 57 from "Entry Plan" or "Basic Plan" to "NFR Plan" corresponds to pattern No. 3 in the second switch determination information 24f and will be therefore immediately made. When the amount of target application service used is more than 5 GB which is the upper limit thereof in the "NFR Plan", the switch from "Entry Plan" or "Basic Plan" to "NFR Plan" corresponds to pattern No. 4 in the second switch determination information 24f and is therefore disallowed. The "Entry Plan" and the "Basic Plan" are basically plans for customers. Therefore, tenants having contracts for the "Entry Plan" or the "Basic Plan" are normally customers. On the other hand, the "NFR Plan" is a plan for sellers as described previously. Therefore, the second switch determination information 24f is designed to prevent the customer from making a contract for the "NFR Plan" for sellers when the amount of target application service used is more than 5 GB which is the upper limit thereof in the "NFR Plan".

The switch from "NFR Plan" to "Free Plan" corresponds to pattern No. 4 in the first switch determination information 240e and is therefore disallowed. The switch from "NFR Plan" to "Entry Plan" or "Basic Plan" corresponds to pattern No. 5 in the first switch determination information 240e and is therefore disallowed. The "NFR Plan" is a plan for sellers as described previously. Therefore, tenants having contracts for the "NFR Plan" are normally sellers. On the other hand, the "Free Plan", the "Entry Plan", and the "Basic Plan" are basically plans for customers. Therefore, tenants having contracts for the "Free Plan", the "Entry Plan" or the "Basic Plan" are normally customers. Hence, in the first switch determination information 240e, the switch from "NFR Plan" to "Free Plan", "Entry Plan" or "Basic Plan" is forbidden and, thus, reuse of accounts by tenants is prevented.

The first switch determination information 240e and the second switch determination information 24f are merely illustrative. Which pattern of switching plans are to be allowed or not and the switch reflection time in allowing the switch of plans can be changed by the service provider rewriting the first switch determination information 240e and the second switch determination information 24f.

As thus far described, when an instruction to switch from a current plan for which a tenant has a contract to another plan intended to switch thereto is issued, the service delivery system 20 determines whether the switch of plans is allowable or disallowable based on the second switch determination information 24f containing second allowable/disallowable switch information indicating allowability or disallowability of the switch of plans in association with a usage of the service delivery system 20 by the tenant (S111 to S113 and S117 to S118), keeps from making the switch of plans when the switch of plans is determined to be disallowable (NO in S118), and makes the switch of plans (S123) when the switch of plans is determined to be allowable (YES in S118). Therefore, the possibility of occurrence of an inappropriate switch of plans not indicated by the second switch determination information 24f can be reduced. Hence, when a seller instructs the service delivery system 20 to switch from a plan for which a customer has a contract to another plan, the service delivery system 20 can reduce the possibility of occurrence of the above inappropriate switch of plans, for example, even if the seller is out of management by the service provider and does not sufficiently understand the natures of plans, the agreement of sellers with the service provider, and so on.

When an instruction to switch from a current plan for which a tenant has a contract to another plan intended to switch thereto is issued, the service delivery system 20 identifies the time to reflect the switch of plans in the service based on a usage of the service delivery system 20 by the tenant, the usage relating to at least one of the current contract plan intended to switch therefrom and the plan intended to switch thereto, and the second switch determination information 24f (S111 to S113, S117, and S119), and makes the switch of plans at the time identified in S119 (S121 to S123) when the switch of plans is determined to be allowable (YES in S118). Therefore, the possibility of occurrence of a switch of plans at an inappropriate time not indicated by the second switch determination information 24f can be reduced.

When an instruction to switch from a current plan for which a tenant has a contract to another plan intended to switch thereto is issued, the service delivery system 20 determines whether the switch of plans is allowable or disallowable based on the amount of application service used by the tenant in the current plan intended to switch therefrom and the second switch determination information 24f. Therefore, regarding the amount of application service used by the tenant in the current plan intended to switch therefrom, the possibility of occurrence of an inappropriate switch of plans not indicated by the second switch determination information 24f can be reduced.

As described above, the service deliverer 25a determines, based on the plan type and the charge type as natures of plans, whether the switch of plans is allowable or disallowable and the time to reflect the switch of plans in the service in allowing the switch of plans (S115). However, the service deliverer 25a may determine, based on a nature of plans other than the plan type and the charge type, whether the switch of plans is allowable or disallowable and the time to reflect the switch of plans in the service in allowing the switch of plans.

As described above, the service deliverer 25a determines whether the switch of plans is allowable or disallowable and the time to reflect the switch of plans in the service in allowing the switch of plans, based on the amount of application service used by the tenant in the current plan intended to switch therefrom as a usage of the service delivery system 20 by the tenant, the usage relating to the current plan intended to switch therefrom (S118). However, the service deliverer 25a may determine whether the switch of plans is allowable or disallowable and the time to reflect the switch of plans in the service in allowing the switch of plans, based on a different usage of the service delivery system 20 by the tenant, the usage being other than the amount of application service used by the tenant in the current plan intended to switch therefrom and relating to at least one of the current plan intended to switch therefrom and the plan intended to switch thereto.

For example, the service deliverer 25a may determine whether the switch of plans is allowable or disallowable and the time to reflect the switch of plans in the service in allowing the switch of plans, based on the period of use of the current plan to date as a usage of the service delivery system 20 by the tenant, the usage relating to at least one of the current contract plan and the plan intended to switch thereto. For example, when the period of use of the current plan to date is not less than a specified period of time, the service deliverer 25a may reflect in the service the plan switch from the current plan intended to switch therefrom to the plan intended to switch thereto. When the period of use of the current plan to date is less than the specified period of time, the service deliverer 25a may forbid the plan switch from the current plan intended to switch therefrom to the plan intended to switch thereto. In this case, when the plan intended to switch thereto contains a contract period, a period based on the contract period in the plan intended to switch thereto, such as, for example, the half of the contract period, may be adopted as the specified period of time described above.

For example, the service deliverer 25a may determine whether the switch of plans is allowable or disallowable and the time to reflect the switch of plans in the service in allowing the switch of plans, based on, as a tenant's usage of the service delivery system 20 relating to at least one of the current plan intended to switch therefrom and the plan intended to switch thereto, both the billing amount calculated in terms of the current plan intended to switch therefrom according the current amount of application service used and the billing amount calculated in terms of the plan intended to switch thereto according the current amount of application service used. For example, when the billing amount calculated in terms of the plan intended to switch thereto according the current amount of application service used is not more than the billing amount calculated in terms of the current plan according the current amount of application service used, the service deliverer 25a may immediately reflect in the service the plan switch from the current contract plan intended to switch therefrom to the plan intended to switch thereto. When the billing amount calculated in terms of the plan intended to switch thereto according the current amount of application service used is more than the billing amount calculated in terms of the current plan according the current amount of application service used, the service deliverer 25a may reflect in the service the plan switch from the current contract plan to the plan intended to switch thereto at the end of the period of time subject to payment or may forbid the plan switch.

For example, the service deliverer 25a may determine whether the switch of plans is allowable or disallowable and the time to reflect the switch of plans in the service in allowing the switch of plans, based on, as a tenant's usage of the service delivery system 20 relating to at least one of the current plan intended to switch therefrom and the plan intended to switch thereto, the contract conditions of the tenant in a specific plan on a specific application service relating to the plan intended to switch thereto on a target application service. For example, assume that there is a condition that the target application service needs to use a specific feature of a specific application service and the tenant using the target application service needs to have a contract for a specific plan on the specific application service in order for the target application service to use the specific feature of the specific application service. In this situation, provided that the tenant using the target application service has a contract for the specific plan on the specific application service, the service deliverer 25a may reflect in the target application service the plan switch from the current plan intended to switch therefrom to the plan intended to switch thereto. When the tenant using the target application service has no contract for the specific plan on the specific application service, the service deliverer 25a may forbid the plan switch from the current plan intended to switch therefrom to the plan intended to switch thereto.

As thus far described, the operation (see FIG. 8) of the service delivery system 20 according to the first embodiment and the operation (see FIG. 14) of the service delivery system 20 according to the second embodiment are premised on a seller instructing the service delivery system 20 to switch from a current plan for which a customer has a contract to another plan. However, also in the case where the service provider instructs the service delivery system 20 to switch from a current plan for which a customer has a contract to another plan and the case where the customer itself instructs the service delivery system 20 to switch from the current plan for which the customer has a contract to another plan, the service delivery system 20 can provide the same effects as in the case where a seller instructs the service delivery system 20 to switch from the current plan for which the customer has a contract to another plan.

The description so far is premised on the service provider selling an application service to a seller by wholesale. However, also in the case where the service provider sells the application service directly to a customer, the service delivery system 20 can provide the same effects as in the case where the service provider sells the application service to a seller by wholesale.

The description so far has been given of the case where the period of time subject to payment for an application service is on a monthly basis. However, the period of time subject to payment for an application service may be on a basis other than monthly. For example, the period of time subject to payment for an application service may be on a yearly basis.

The following changes may be made commonly to the operation (see FIG. 8) of the service delivery system 20 according to the first embodiment and the operation (see FIG. 14) of the service delivery system 20 according to the second embodiment.

For example, the service deliverer 25a may determine, by reference to the plan information 24d, whether the switch of plans is allowable or disallowable and the time to reflect the switch of plans in the application service in allowing the switch of plans, based on, as a nature of the plans, the upper limit of the amount of application service used in each of the plans. For example, when the upper limit of the amount of application service used in the current plan is not higher than the upper limit of the amount of application service used in the plan intended to switch thereto, the service deliverer 25a may immediately reflect in the application service the plan switch from the current plan intended to switch therefrom to the plan intended to switch thereto. When the upper limit of the amount of application service used in the current plan is higher than the upper limit of the amount of application service used in the plan intended to switch thereto, the service deliverer 25a may reflect in the application service the plan switch from the current plan intended to switch therefrom to the plan intended to switch thereto at the end of the period of time subject to payment or may forbid the plan switch. When, in setting the switch reflection time for the plan switch from the current plan intended to switch therefrom to the plan intended to switch thereto, not to "immediate", but to the end of the period of time subject to payment, the actual amount of application service used is more than the upper limit of the amount of application service used in the plan intended to switch thereto at the time of issuance of an instruction to switch from the current plan to the plan intended to switch thereto, the customer can obtain the benefit of reducing the actual amount of application service used to not more than the upper limit of the amount of application service used in the plan intended to switch thereto, until the end of the period of time subject to payment.

For another example, the service deliverer 25a may determine, by reference to the plan information 24d, whether the switch of plans is allowable or disallowable and the time to reflect the switch of plans in the application service in allowing the switch of plans, based on, as a nature of the plans, at least either the upper limit of the amount of application service used within the basic price (hereinafter, referred to as "basic price-based used amount upper limit") in a monthly pay-per-use plan or the amount of application service used corresponding to the unit of addition of additional charges incurred when the amount of application service used exceeds the basic price-based used amount upper limit in the monthly pay-per-use plan (hereinafter, referred to as the "additional used amount unit"). In the "Basic Plan" of the plan information 24d shown in FIG. 5, the basic price-based used amount upper limit is not defined and the additional used amount unit is 1 GB. For example, in the case where both the current plan intended to switch therefrom and the plan intended to switch thereto are in a monthly pay-per-use billing system, when the basic price-based used amount upper limit of the current plan is not higher than the basic price-based used amount upper limit of the plan intended to switch thereto, the service deliverer 25a may immediately reflect in the service the plan switch from the current plan to the plan intended to switch thereto. When the basic price-based used amount upper limit of the current plan is higher than the basic price-based used amount upper limit of the plan intended to switch thereto, the service deliverer 25a may reflect in the service the plan switch from the current plan to the plan intended to switch thereto at the end of the period of time subject to payment or may forbid the plan switch. For another example, in the case where both the current plan intended to switch therefrom and the plan intended to switch thereto are in a monthly pay-per-use billing system, when the additional used amount unit of the current plan is not more than the additional used amount unit of the plan intended to switch thereto, the service deliverer 25a may immediately reflect in the service the plan switch from the current plan to the plan intended to switch thereto. When the additional used amount unit of the current plan is more than the additional used amount unit of the plan intended to switch thereto, the service deliverer 25a may reflect in the service the plan switch from the current plan to the plan intended to switch thereto at the end of the period of time subject to payment or may forbid the plan switch.

For example, the service deliverer 25a may determine whether the switch of plans is allowable or disallowable and the time to reflect the switch of plans in the service in allowing the switch of plans, based on the grade of each of the plans as a nature of the plans. Generally, a higher-grade plan has a higher price. For example, as for monthly pay-per-use plans, the higher the basic price thereof is, the higher the grade thereof may be. Generally, higher-grade plans may be, for example, higher in upper limit of the amount of service used, may be given a more special feature or may be able to be given a special feature with the payment of an additional fee. For example, as for monthly pay-per-use plans, the higher the grade thereof is, the lower the charge per unit of the amount of service used over the basic price-based used amount upper limit may be. For example, when the grade of the plan intended to switch thereto is not lower than the grade of the current plan intended to switch therefrom, the service deliverer 25a may immediately reflect in the service the plan switch from the current plan to the plan intended to switch thereto. When the grade of the plan intended to switch thereto is lower than the grade of the current plan intended to switch therefrom, the service deliverer 25a may reflect in the service the plan switch from the current plan to the plan intended to switch thereto at the end of the period of time subject to payment or may forbid the plan switch. In this case, the grades of the plans and details thereof are stored in the plan information 24d or the switch determination information 24e (the first switch determination information 240e) and, therefore, the service deliverer 25a makes the above determination with reference to the plan information 24d or the switch determination information 24e in which the grades of the plans and the details thereof are stored.

For example, the service deliverer 25a may determine whether the switch of plans is allowable or disallowable and the time to reflect the switch of plans in the service in allowing the switch of plans, based on, as a nature of the plans, whether or not each of the plans has an expiration date. In some of subscription-based plans, an expiration date, or a contract period, is set. For example, generally, there exist plans in which a contract period, a renewal period, and a renewal fee are set. For example, when the current plan intended to switch therefrom has no expiration date, but the plan intended to switch thereto has an expiration date, the service deliverer 25a may immediately reflect in the service the plan switch from the current plan to the plan intended to switch thereto. When the current plan intended to switch therefrom has an expiration date, but the plan intended to switch thereto has no expiration date, the service deliverer 25a may reflect in the service the plan switch from the current plan to the plan intended to switch thereto at the end of the period of time subject to payment or may forbid the plan switch. In this case, the expiration dates of the plans and details thereof are stored in the plan information 24d or the switch determination information 24e (the first switch determination information 240e) and, therefore, the service deliverer 25a makes the above determination with reference to the plan information 24d or the switch determination information 24e (the first switch determination information 240e) in which the expiration dates of the plans and the details thereof are stored.

In a general service delivery system not according to the above first and second embodiments, there may be a case that a seller out of management by the service provider instructs the service delivery system to make an inappropriate plan switch from a plan for which a customer has a contract to another plan, for example, because of insufficient understanding of the natures of plans, the agreement of sellers with the service provider, and so on.

Alternatively, even in the case where the service provider sells an application service directly to a customer, the service provider may instruct the service delivery system to make an inappropriate plan switch of a plan for which a customer has a contract to another plan, for example, by misinterpretation.

Unlike the above, in the above first and second embodiments, the above inconveniences can be eliminated and the possibility of occurrence of an inappropriate switch of plans can be reduced.

## Claims

1. An information processing device for service delivery (20) comprising:
a storage device (24) storing (i) plan information indicating a plurality of plans for using a service and (ii) first allowable/disallowable switch information indicating allowability or disallowability of a plan switch from a current plan for which a tenant using the service has a contract to another plan intended to switch thereto in association with a combination of a nature of the current plan intended to switch therefrom and a nature of the plan intended to switch thereto; and
a service deliverer (25a) that, upon issuance of an instruction to switch from the current plan for which the tenant has the contract to the plan intended to switch thereto, determines whether the instructed plan switch between the plans is allowable or disallowable based on the plan information and the first allowable/disallowable switch information both stored in the storage device (24), keeps from making the plan switch when the plan switch is determined to be disallowable, and makes the plan switch when the plan switch is determined to be allowable.

2. The information processing device for service delivery (20) according to claim 1, wherein
the first allowable/disallowable switch information indicates, in association with the combination, a time to reflect in the service the plan switch from the current plan for which the tenant has the contract to the plan intended to switch thereto,
upon issuance of the instruction to switch from the current plan for which the tenant has the contract to the plan intended to switch thereto, the service deliverer (25a) identifies the time to reflect the plan switch in the service based on the plan information and the first allowable/disallowable switch information both stored in the storage device (24), and
when the plan switch is determined to be allowable, the service deliverer (25a) makes the plan switch at the time identified based on the combination, the plan information, and the first allowable/disallowable switch information.

3. The information processing device for service delivery (20) according to claim 1, wherein the nature of the plan includes a type of the plan.

4. The information processing device for service delivery (20) according to claim 1, wherein the nature of the plan includes information indicating presence or absence of an extra charge system in the plan.

5. A service providing program (24a) that allows a processor of an information processing device for service delivery (20) comprising: a storage device (24) storing (i) plan information indicating a plurality of plans for using a service and (ii) allowable/disallowable switch information indicating allowability or disallowability of a plan switch from a current plan for which a tenant using the service has a contract to another plan intended to switch thereto in association with a combination of a nature of the current plan intended to switch therefrom and a nature of the plan intended to switch thereto; and the processor, to execute processing for determining, upon issuance of an instruction to switch from the current plan for which the tenant has the contract to the plan intended to switch thereto, whether the instructed plan switch between the plans is allowable or disallowable based on the plan information and the allowable/disallowable switch information both stored in the storage device (24), keeping from making the plan switch when the plan switch is determined to be disallowable, and making the plan switch when the plan switch is determined to be allowable.

6. The information processing device for service delivery (20) according to claim 1, wherein
the storage device (24) stores second allowable/disallowable switch information that indicates allowability or disallowability of the plan switch from the current plan for which the tenant using the service has the contract to the plan intended to switch thereto in association with a usage of the information processing device for service delivery (20) by the tenant, the usage relating to the current plan intended to switch therefrom and the plan intended to switch thereto,
when determining that the plan switch is disallowable based on the plan information and the first allowable/disallowable switch information, the service deliverer (25a) determines whether the plan switch is allowable or disallowable based on the second allowable/disallowable switch information,
when the plan switch is determined to be disallowable based on the second allowable/disallowable switch information, the service deliverer (25a) keeps from making the plan switch, and
when the plan switch is determined to be allowable based on the second allowable/disallowable switch information, the service deliverer (25a) makes the plan switch.

7. The information processing device for service delivery (20) according to claim 1, wherein
the storage device (24) stores, instead of the plan information and the first allowable/disallowable switch information, second allowable/disallowable switch information indicating allowability or disallowability of a plan switch from a current plan for which a tenant using a service has a contract to another plan intended to switch thereto in association with a usage of the information processing device for service delivery (20) by the tenant, the usage relating to the current contract plan intended to switch therefrom and the plan intended to switch thereto; and
the service deliverer (25a), upon issuance of an instruction to switch from the current plan for which the tenant has the contract to the plan intended to switch thereto, determines whether the instructed plan switch between the plans is allowable or disallowable based on the second allowable/disallowable switch information instead of the plan information and the first allowable/disallowable switch information, keeps from making the plan switch when the plan switch is determined to be disallowable, and makes the plan switch when the plan switch is determined to be allowable.

8. The information processing device for service delivery (20) according to claim 7, wherein
the second allowable/disallowable switch information further indicates, in association with the usage, a time to reflect in the service the plan switch from the current plan for which the tenant has the contract to the plan intended to switch thereto,
upon issuance of the instruction to switch from the current plan for which the tenant has the contract to the plan intended to switch thereto, the service deliverer (25a) identifies the time to reflect the plan switch in the service based on the second allowable/disallowable switch information, and
when the plan switch is determined to be allowable, the service deliverer (25a) makes the plan switch at the identified time.

9. The information processing device for service delivery (20) according to claim 8, wherein the usage includes an amount of the service used by the tenant in the current plan intended to switch therefrom.
